# EUROPEAN PATENT SPECIFICATION

(11) **EP 2 537 604 B1**
(45) Date of publication and mention of the grant of the patent: **20.07.2016**
(21) Application number: 12171188.1
(22) Date of filing: 07.06.2012
(51) Int. Cl.: B21F 23/00, B21D 43/00, B65G 59/04

(54) **Structure for accumulating metal bars and method for feeding bars**
Sammelvorrichtung für Metallstäbe und Verfahren zum Zuführen von Stäben
Structure pour l'accumulation des barres métalliques et methode d'alimentation des barres

(30) Priority: 20.06.2011 IT TO20110536
(43) Date of publication of application: 26.12.2012
(73) Proprietor: Oscam S.r.l., 10127 Torino (IT)
(72) Inventor: Peruzzo, Stefano, I-10127 Torino (IT)
(74) Representative: Frontoni, Stefano

(56) References cited:
- EP-A2- 0 171 851
- DE-A1- 2 417 851
- DE-A1- 2 916 228
- GB-A- 828 305
- US-A- 3 195 737

## Description

The present invention relates to a structure for accumulating metal bars, in particular bars for the reinforcement of concrete.

It is known in the prior art to providing, in an intermediate station of a system for processing metal bars, a structure for storing the bars carried on which are the bars coming from a first station of the system and from which the bars are fed to a second station, subsequent to the first station. Usually, the bars are carried in said storage structure, for example, via overhead-travelling-crane means or catenary means, which are designed to connect the two successive stations of the system with respect to one another. Moreover, in general, the bars are picked up from said structure for being fed to the second station, via an automatic loader comprising pick-up means, which are arranged above the storage structure and are guided between a lowered position, where they engage at least one of the bars in said structure, and a raised position, where the portion of bar engaged is raised for being brought to the second station of the system, for example, a bending machine. DE2417851 discloses a structure for accumulating metal bars according to the preamble of Claim 1.

The object of the present invention is to provide an accumulation structure that will facilitate the operations of said pick-up means as much as possible.

A further object is to provide an accumulation structure that will enable simplification of the overall configuration of the processing system.

One or more of the above objects are achieved with an accumulation structure, which presents the characteristics specified in Claim 1.

An object of the present invention is also a method according to Claim 11.

The claims form an integral part of the technical teaching provided herein in relation to the invention.

The invention will now be described, purely by way of non-limiting example, with reference to the annexed drawings, in which:
- Figure 1 illustrates an example of a first variant of the accumulation and conveying structure described herein, in a first operating condition;
- Figure 2 illustrates the structure of Figure 1 in a second operating condition.

Illustrated in the ensuing description are the various specific details aimed at providing an in-depth understanding of the embodiments. The embodiments may be obtained without one or more specific details, or with other methods, components, materials, etc. In other cases, known structures, materials, or operations have not been described in detail so that various aspects of the embodiments will not be obscured.

The references used are merely for convenience and hence do not define the sphere of protection of the embodiments.

It should be pointed out that in the figures the various parts making up the structure according to the invention are illustrated only schematically, both in so far as the elimination of the constructional details renders the drawings themselves simpler and more readily understandable and in so far as said constructional details can be obtained in any known way, as will emerge clearly to persons skilled in the branch.

With reference to the figures, the reference number 10 designates a structure for accumulating metal bars, in particular bars for the reinforcement of concrete, for an automatic system for processing said bars. The structure described herein is preferably to be set in an intermediate station of the system for receiving the bars, or the end portions of said bars, coming from a first station, for example, a cutting machine, and to constitute a storage space for said bars, from which a loader associated to a second station, for example, a bending machine, picks up said bars or end portions of said bars and feeds them to said second station.

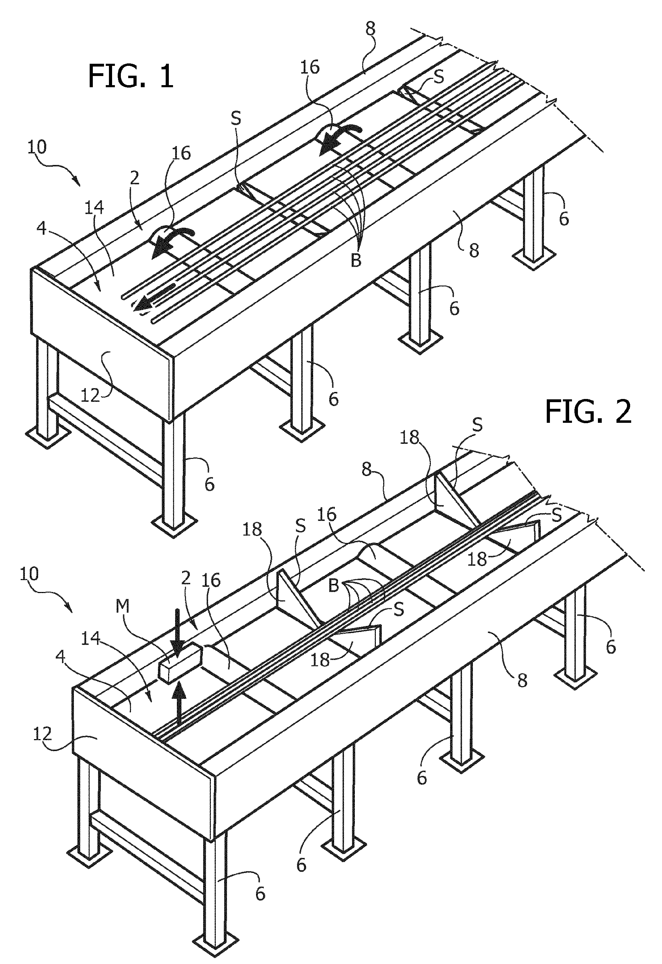

Said accumulation structure can be obtained according to two main variants. Figures 1 and 2 illustrate an example of the first variant, which is the preferred variant, whilst illustrated in Figures 3 and 4 is an example of the second variant.

The accumulation structure according to the first variant (an example of embodiment of which is illustrated in Figures 1 and 2) also constitutes a conveying structure, which is to be set between the first and second stations of the system and is designed to convey the bars or the end portions of said bars from the first station up to the second station, from where said bars are then picked up by the loader associated to said second station. It should be noted that illustrated in Figures 1 and 2 is just the end portion of said structure that is located at the second station. Likewise illustrated schematically and merely by way of example in said figures are pick-up means M, in the form of a magnet, forming part of the loader associated to said second station.

In various embodiments, as in the one illustrated in Figures 1 and 2, said structure comprises at least one channel 2, which is designed to receive the bars and the bottom of which (designated by the reference number 4) is equipped with motor-driven rollers 16. Said rollers constitute the conveying means via which the structure 10 carries the bars along the channel, from a first position to a second position, both of the positions being inside the channel. It should be noted that said conveying means can in any case be obtained in any other way, as would on the other hand be evident to a person skilled in the sector. For example, said means can envisage, instead of the motor-driven rollers, a conveyor belt that is set within the channel (and that, for example, forms part of the bottom thereof) or else gripper means designed to draw the bars along said channel. In any case, the bars move in a generic plane of conveyance that extends along the channel and is contained therein.

The channel 2 can be of any type known in the art. In the example of the figures, the channel 2 comprises a supporting frame, which presents a series of uprights 6 that rest on the floor and keep the bottom 4 suspended, and opposite side walls 8 that delimit said bottom laterally. In various embodiments, as in the one illustrated, at one or both of the ends of the channel, or at a short distance from said end/ends, is set an abutment plate 12 that connects the two side walls 8 together and defines a surface of abutment upon which the ends of the bars come to bear. Said plate ensures that the bars are positioned longitudinally along the channel in an adequate way for being subsequently gathered and picked up.

In various embodiments, as in the one illustrated, the bottom 4 comprises a series of sheet-metal surfaces 14, set at a distance from one another and resting on the columns 6. Arranged between contiguous surfaces 14 are the motor-driven rollers 16, which project above said surfaces and together define a plane of conveyance of the bars. The means for driving the rollers, as likewise the means via which the rollers are rotatably carried by the structure, are not described herein in detail in so far as they are not in themselves important for an understanding of the innovative aspects of the structure described herein; as would be evident for a person skilled in the sector said means can in any case be obtained in any way.

As mentioned previously, illustrated in the figures is just one part of the structure 10 and of its channel 2, but these must in any case be understood as extending in such a way, for example, as to connect two successive stations of the system to one another. In this regard, it should be noted that the bottom 4 is equipped with a number of rollers such as to be able to move the bars, or the end portions of said bars, along the entire channel.

In various embodiments, as in the one illustrated, the bottom 4 of the channel has means designed to bring the bars or the end portions of said bars up to one another in their transverse direction, preferably grouping them in one and the same bundle of bars set on top of one another or in any case according to a configuration in which they lie alongside one another and in contact with one another. In various embodiments, as in the one illustrated, said means can be switched between an inactive configuration, where they do not interfere with conveyance of the bars, or end portions of said bars, by the rollers (or by conveying means alternative thereto), and an active configuration, where they define a supporting section S of the bars having a profile that is V shaped, shaped like a cradle, or in any case substantially concave, and projecting at least partially above the aforesaid plane of conveyance so that the bars, or the end portions of said bars, gather within said section. It should be noted that said means are designed to form a supporting section S that is open at the top so as to enable the pick-up means M to pick up the bars in the proximity of the section S itself.

In the preferred embodiment, illustrated in the figures, said means comprise one or more plates 18, each of which is, for example, set between contiguous surfaces 14 and has at the top a supporting section S with a V-shaped profile. Said plates are mounted on the frame of the structure so as to be vertically mobile between a lowered position and a raised position, governed by appropriate driving means (not illustrated), for example, a linear actuator. In the lowered position, said plates are located underneath the plane of conveyance defined by the rollers 16, whilst in the raised position they are located at least partially above said plane of conveyance so that the bars gather within the section S.

As will on the other hand be evident from their operation described hereinafter, the means for bringing the bars up to one another referred to above are provided in a position corresponding to the portion of channel from where the bars, or the end portions of said bars, are then picked up by the pick-up means M of the loader mentioned previously. Consequently, in the embodiment illustrated above, the plates 18 do not necessarily have to be present along the entire channel but only in the part thereof that is located in a position corresponding to the aforesaid loader. In preferred embodiments, said means or plates are provided at an end portion of the channel.

Operation of said structure envisages that, in a first station of the processing system, the bars or the end portions of said bars are released on one end of the channel, one at a time or else in lots, and moved longitudinally, via the rollers 16, until they reach a position in the channel corresponding to a second station of the system, underneath, for example, the pick-up means M of an automatic loading device. During said step of transfer of the bars, the plates 18 are located in their lowered position, as illustrated in Figure 1. With reference to said Figure 1, it should be noted how, during conveyance, the bars are arranged in the channel alongside one another in the longitudinal direction of the rollers so that they can be conveyed all together and in an orderly way.

When the bars or their end portions have reached the position for being picked up, corresponding to the loading device, the plates 18 are then brought into their raised position so as to engage the bars, or the end portions of said bars, and cause these to concentrate in the central part of the section S of each plate, as a result of the force of gravity. At this point, the loading device can be operated for picking up one or more bars at a time, for a number of times necessary for the desired number of bars to be loaded on the processing machine served by it. Since the section S groups the bars all together and causes them to be always present in its central part, where they gather by gravity, the pick-up means can be brought always into one and the same position in the channel (or in any case within the latter with minimal variations of position), in said central part of the section S, whatever the number of bars still present in the channel. Consequently, the pick-up means do not have to "look for" the bar to be picked up in the channel each time, thus enabling the operations of loading of the bars to be simpler and faster.

Moreover, as has already been seen, in the embodiment illustrated above the bars, or the end portions of said bars, are conveyed from the first station to the second station by the structure 10 itself, and it is consequently not necessary for the system to envisage further conveying means between the two stations.

An embodiment alternative to the one described and illustrated above in the figures envisages, instead of the plate 18, two articulated levers mobile in a co-ordinated way between an inactive condition, where they do not interfere with conveyance of the bars, or end portions of said bars, by the rollers (or conveying means alternative thereto), and an active condition, where they define a V-shaped profile similar to the one described previously with reference to the plates 18, which extends at least partially above the plane of conveyance referred to above.

A further alternative embodiment envisages, instead of the plate 18, a fixed element and an articulated lever, the latter being mobile between an inactive condition, where it does not interfere with conveyance of the bars, or end portions of said bars, by the rollers (or conveying means alternative thereto), and an active condition, where it defines, together with the fixed element, a V-shaped profile similar to the one described previously with reference to the plates 18, which extends at least partially above the plane of conveyance referred to above.

In both of the embodiments referred to above, operation is in any case the same as what has been described above with reference to the embodiment with the plates 18.

Of course, without prejudice to the principle of the invention, the details of construction and the embodiments may vary, even significantly, with respect to what has been illustrated herein purely by way of non-limiting example, without thereby departing from the scope of the invention, as defined in the annexed claims.

## Claims

1. A structure for accumulating metal bars (B), in particular bars for the reinforcement of concrete, said structure comprising at least one channel (2) designed to receive the bars, and means (18) designed to bring the bars, or end portions of said bars, received in said channel, up to one another, in their transverse direction,
said structure being **characterised in that** it comprises means (16) for conveying said bars from a first position to a second position, both positions being inside said channel (2), and **in that** said means (18) designed to bring the bars, or end portions of said bars, up to one another are designed to act on said bars, or end portions of said bars, which are located in said second position.

2. The structure according to any one of the preceding claims, wherein said means for bringing the bars up to one another can be switched between an inactive configuration, where they do not interfere with conveyance of said bars, or said end portions of said bars, in said channel, and an active configuration, where they define a supporting section (S) for said bars that has a V-shaped or in any case substantially concave profile, in which said bars or end portions of said bars gather.

3. The structure according to Claim 2, wherein said means (18) for bringing the bars up to one another comprise at least one plate (18) having a top side that defines said supporting section (S), said plate being mobile between a lowered position corresponding to said inactive configuration of said means, and a raised position corresponding to said active configuration of said means.

4. The structure according to Claim 2, wherein said means (18) for bringing the bars up to one another comprise two articulated levers that are mobile in a co-ordinated way with respect to one another, between said inactive configuration, where said levers do not interfere with conveyance of said bars or said end portions of said bars in said channel (2), and said active configuration, where said levers together define said supporting section (S).

5. The structure according to Claim 2, wherein said means (18) for bringing the bars up to one another comprise a fixed element and an articulated lever, the latter being mobile between said inactive configuration, where it does not interfere with conveyance of said bars or end portions of said bars in said channel (2), and said active configuration, where it defines, together with the fixed element, said supporting section (S).

6. The structure according to any one of the preceding claims, wherein said means (18) for bringing the bars up to one another are located in the proximity of an end portion of said channel.

7. The structure according to any one of the preceding claims, wherein said conveying means comprise motor-driven rollers (16) arranged at the bottom of said channel.

8. The structure according to any one of the preceding claims, wherein said channel comprises at least one abutment plate (12), upon which the ends of the bars come to bear and which is designed to define said second position.

9. The structure according to Claim 1, wherein said means for bringing the bars up to one another can be switched between an inactive configuration, where they do not interfere with conveyance of said bars, or end portions of said bars, along said channel, and an active configuration, where they define a supporting section (S) for said bars that has a V-shaped or in any case substantially concave profile projecting at least partially above the plane of conveyance of said bars along said channel so that the bars or end portions of said bars gather within said section (S).

10. A method for feeding metal bars, in particular bars for the reinforcement of concrete, from a first station to a second station of a system for processing said bars,
said method comprising the steps of:
providing a channel (2) designed to receive said bars from said first station;
bringing said bars or end portions of said bars along said channel (2) from a first position corresponding to said first station to a second position corresponding to said second station, both positions being inside said channel (2);
bringing the bars, or end portions of said bars, which are located in said second position up to one another in their transverse direction; and
picking up the bars, or end portions of said bars, which have been brought up to one another, one at a time or in groups, and transferring them to said second station.

11. The method according to Claim 10, wherein the step of bringing the bars up to one another includes providing, in said channel, means (18) that can be switched between an inactive configuration, where said means do not interfere with conveyance of said bars or end portions of said bars in said channel (2), and an active configuration, where said means define a supporting section (S) for said bars that has a V-shaped or in any case substantially concave profile, in which said bars or end portions of said bars gather.

12. The method according to Claim 10, wherein the step of bringing the bars up to one another includes providing at least one plate (18) having a top side that defines a supporting section (S) for said bars, which has a V-shaped or in any case substantially concave profile, said plate being mobile between a lowered position, where it does not interfere with conveyance of said bars or end portions of said bars in said channel, and a raised position, where said bars or end portions of said bars gather in said section (S).

13. The method according to Claim 10, wherein the step of bringing the bars up to one another includes providing two articulated levers mobile in a co-ordinated way with respect to one another, between an inactive condition, where said levers do not interfere with conveyance of said bars or end portions of said bars in said channel, and an active condition, where said levers define together a supporting section (S) for said bars that has a V-shaped or in any case substantially concave profile, in which said bars or end portions of said bars gather.

14. The method according to any one of Claims 10 to 13, wherein said first station is a storage station, and said second station is a processing station.

15. The method according to any one of Claims 10 to 13, wherein said first station is a cutting station and said second station is a bending station.

16. The method according to any one of Claims 10 to 15, wherein bringing said bars into said second position envisages bringing said bars to bear upon an abutment plate (12) of said channel.

## Patentansprüche

1. Aufbau zum Akkumulieren von Metallstangen (B) und insbesondere Stangen für die Verstärkung von Beton, wobei der Aufbau wenigstens einen Kanal (2) für das Empfangen der Stangen und Einrichtungen (18) zum Anordnen der in dem Kanal empfangenen Stangen oder von Endteilen der Stangen nebeneinander in der Transversalrichtung umfasst,
wobei der Aufbau **dadurch gekennzeichnet ist, dass** er Einrichtungen (16) zum Befördern der Stangen von einer ersten Position zu einer zweiten Position umfasst, wobei beide Positionen in dem Kanal (2) vorgesehen sind, und dass die Einrichtungen (18) zum Anordnen der Stangen oder von Endteilen der Stangen nebeneinander ausgebildet sind, um auf die Stangen oder Endteile der Stangen, die sich an der zweiten Position befinden, zu wirken.

2. Aufbau nach einem der vorstehenden Ansprüche, wobei die Einrichtungen zum Anordnen der Stangen nebeneinander zwischen einer inaktiven Konfiguration, in welcher sie eine Beförderung der Stangen oder der Endteile der Stangen nicht behindern, und einer aktiven Konfiguration, in welcher sie einen Halteabschnitt (S) für die Stangen mit einem V-förmigen oder in jedem Fall im Wesentlichen konkaven Profil für das Sammeln der Stangen oder Endteile der Stangen definieren, versetzt werden können.

3. Aufbau nach Anspruch 2, wobei die Einrichtungen (18) zum Anordnen der Stangen nebeneinander wenigstens eine Platte (18), deren Oberseite den Halteabschnitt (S) definiert, umfassen, wobei die Platte zwischen einer gesenkten Position in Entsprechung zu der inaktiven Konfiguration der Einrichtungen und einer gehobenen Position in Entsprechung zu der aktiven Konfiguration der Einrichtungen bewegt werden kann.

4. Aufbau nach Anspruch 2, wobei die Einrichtungen (18) zum Anordnen der Stangen nebeneinander zwei Gelenkhebel umfassen, die miteinander koordiniert zwischen der inaktiven Konfiguration, in welcher die Hebel eine Beförderung der Stangen oder der Endteile der Stangen in dem Kanal (2) nicht behindern, und der aktiven Konfiguration, in welcher die Hebel gemeinsam den Halteabschnitt (S) definieren, bewegt werden können.

5. Aufbau nach Anspruch 2, wobei die Einrichtungen (18) zum Anordnen der Stangen nebeneinander ein fixes Element und einen Gelenkhebel umfassen, wobei der letztere zwischen der inaktiven Konfiguration, in welcher er eine Beförderung der Stangen oder der Endteile der Stangen in dem Kanal (2) nicht behindert, und der aktiven Konfiguration, in welcher er zusammen mit dem fixen Element den Halteabschnitt (S) definiert, bewegt werden kann.

6. Aufbau nach einem der vorstehenden Ansprüche, wobei die Einrichtungen (18) zum Anordnen der Stangen nebeneinander in der Nähe eines Endteils des Kanals angeordnet sind.

7. Aufbau nach einem der vorstehenden Ansprüche, wobei die Beförderungseinrichtung motorbetriebene Rollen (16), die an dem Boden des Kanals angeordnet sind, umfasst.

8. Aufbau nach einem der vorstehenden Ansprüche, wobei der Kanal wenigstens eine Anstoßplatte (12) umfasst, gegen welche die Enden der Stangen anstoßen und die ausgebildet ist, um die zweite Position zu definieren.

9. Aufbau nach Anspruch 1, wobei die Einrichtungen zum Anordnen der Stangen nebeneinander zwischen einer inaktiven Konfiguration, in welcher sie eine Beförderung der Stangen oder der Endteile der Stangen entlang des Kanals nicht behindern, und einer aktiven Konfiguration, in welcher sie einen Halteabschnitt (S) für die Stangen mit einem V-förmigen oder in jedem Fall im Wesentlichen konkaven Profil, das wenigstens teilweise über die Beförderungsebene der Stangen entlang des Kanals vorsteht, für das Sammeln der Stangen oder der Endteile der Stangen in dem Abschnitt (S) definieren, versetzt werden können.

10. Verfahren zum Zuführen von Metallstangen und insbesondere Stangen für die Verstärkung von Beton von einer ersten Station zu einer zweiten Station in einem System zum Verarbeiten der Stangen,
wobei das Verfahren die folgenden Schritte umfasst:
Vorsehen eines Kanals (2), der ausgebildet ist, um die Stangen von der ersten Station zu empfangen,
Versetzen der Stangen oder von Endteilen der Stangen entlang des Kanals (2) von einer ersten Position in Entsprechung zu der ersten Station zu einer zweiten Position in Entsprechung zu der zweiten Station, wobei beide Positionen in dem Kanal (2) vorgesehen sind,
Anordnen der Stangen oder der Endteile der Stangen, die sich an der zweiten Position befinden, nebeneinander in der Transversalrichtung, und
Aufgreifen der Stangen oder der Endteile der Stangen, die nebeneinander angeordnet wurden, jeweils einzeln oder in Gruppen und Transportieren derselben zu der zweiten Station.

11. Verfahren nach Anspruch 10, wobei der Schritt zum Anordnen der Stangen nebeneinander das Vorsehen, in dem Kanal, von Einrichtungen (18) umfasst, die zwischen einer inaktiven Konfiguration, in welcher die Einrichtungen eine Beförderung der Stangen oder der Endteile der Stangen in dem Kanal (2) nicht behindern, und einer aktiven Konfiguration, in welcher die Einrichtungen einen Halteabschnitt (S) für die Stangen mit einem V-förmigen oder in jedem Fall im Wesentlichen konkaven Profil für das Sammeln der Stangen oder Endteile der Stangen definieren, versetzt werden können.

12. Verfahren nach Anspruch 10, wobei der Schritt zum Anordnen der Stangen nebeneinander das Vorsehen wenigstens einer Platte (18) umfasst, deren Oberseite einen Halteabschnitt (S) für die Stangen mit einem V-förmigen oder in jedem Fall im Wesentlichen konkaven Profil definiert, wobei die Platte zwischen einer gesenkten Position, in welcher sie eine Beförderung der Stangen oder Endteile der Stangen in dem Kanal nicht behindert, und einer gehobenen Position, in welcher die Stangen oder Endteile der Stangen in dem Abschnitt (S) gesammelt werden, bewegt werden kann.

13. Verfahren nach Anspruch 10, wobei der Schritt zum Anordnen der Stangen nebeneinander das Vorsehen von zwei Gelenkhebeln umfasst, die miteinander koordiniert zwischen einer inaktiven Bedingung, in welcher die Hebel eine Beförderung der Stangen oder Endteile der Stangen in dem Kanal nicht behindern, und einer aktiven Bedingung, in welcher die Hebel gemeinsam einen Halteabschnitt (S) für die Stangen mit einem V-förmigen oder in jedem Fall im Wesentlichen konkaven Profil für das Sammeln der Stangen oder Endteile der Stangen definieren, bewegt werden können.

14. Verfahren nach einem der Ansprüche 10 bis 13, wobei die erste Station eine Lagerstation ist und die zweite Station eine Verarbeitungsstation ist.

15. Verfahren nach einem der Ansprüche 10 bis 13, wobei die erste Station eine Schneidestation ist und die zweite Station eine Biegestation ist.

16. Verfahren nach einem der Ansprüche 10 bis 15, wobei das Versetzen der Stangen zu der zweiten Position das Anstoßen der Stangen gegen eine Anstoßplatte (12) des Kanals umfasst.

## Revendications

1. Structure pour accumuler des barres métalliques (B), en particulier des barres pour le renforcement du béton, ladite structure comprenant au moins un canal (2) conçu pour recevoir les barres, et des moyens (18) conçus pour amener les barres ou des parties d'extrémité desdites barres reçues dans ledit canal les unes sur les autres dans leur direction transversale,
ladite structure étant **caractérisée en ce qu'**elle comprend des moyens (16) pour transporter lesdites barres d'une première position à une seconde position, les deux positions étant à l'intérieur dudit canal (2), et **en ce que** lesdits moyens (18) conçus pour amener les barres ou des parties d'extrémité desdites barres, les unes sur les autres, sont conçus pour agir sur lesdites barres ou les parties d'extrémité desdites barres, qui sont positionnées dans ladite seconde position.

2. Structure selon l'une quelconque des revendications précédentes, dans laquelle lesdits moyens pour amener les barres les unes sur les autres peuvent être commutés entre une configuration inactive dans laquelle ils ne confèrent pas le transport desdites barres ou desdites parties d'extrémité desdites barres dans ledit canal, et une configuration active dans laquelle ils définissent une section de support (S) pour lesdites barres qui a un profil en forme de V ou dans tous les cas sensiblement concave, dans laquelle lesdites barres ou parties d'extrémité desdites barres se regroupent.

3. Structure selon la revendication 2, dans laquelle lesdits moyens (18) pour amener les barres les unes sur les autres comprennent au moins une plaque (18) ayant un côté supérieur qui définit ladite section de support (S), ladite plaque étant mobile entre une position abaissée correspondant à ladite configuration inactive desdits moyens, et une position levée correspondant à ladite configuration active desdits moyens.

4. Structure selon la revendication 2, dans laquelle lesdits moyens (18) pour amener les barres les unes sur les autres comprennent deux leviers articulés qui sont mobiles d'une manière coordonnée l'un par rapport à l'autre, entre une configuration inactive dans laquelle lesdits leviers n'interfèrent pas avec le transport desdites barres ou desdites parties d'extrémité desdites barres dans ledit canal (2), et ladite configuration active dans laquelle lesdits leviers définissent ensemble ladite section de support (S).

5. Structure selon la revendication 2, dans laquelle lesdits moyens (18) pour amener les barres les unes sur les autres comprennent un élément fixe et un levier articulé, ce dernier étant mobile entre ladite configuration inactive dans laquelle il n'interfère pas avec le transport desdites barres ou des parties d'extrémité desdites barres dans ledit canal (2), et ladite configuration active dans laquelle il définit, conjointement avec l'élément fixe, ladite section de support (S).

6. Structure selon l'une quelconque des revendications précédentes, dans laquelle lesdits moyens (18) pour amener les barres les unes sur les autres, sont positionnés à proximité d'une partie d'extrémité dudit canal.

7. Structure selon l'une quelconque des revendications précédentes, dans laquelle lesdits moyens de transport comprennent des rouleaux motorisés (16) agencés au fond dudit canal.

8. Structure selon l'une quelconque des revendications précédentes, dans laquelle ledit canal comprend au moins une plaque de butée (12) sur laquelle les extrémités des barres viennent s'appuyer et qui est conçue pour définir ladite seconde position.

9. Structure selon la revendication 1, dans laquelle lesdits moyens pour amener les barres les unes sur les autres peuvent être commutés entre une configuration inactive dans laquelle ils n'interfèrent pas avec le transport desdites barres ou des parties d'extrémité desdites barres le long dudit canal, et une position active dans laquelle ils définissent une section de support (S) pour lesdites barres qui a un profil en forme de V ou dans tous les cas sensiblement concave, faisant saillie au moins partiellement au-dessus du plan de transport desdites barres le long dudit canal de sorte que les barres ou les parties d'extrémité desdites barres se regroupent à l'intérieur de ladite section (S).

10. Procédé pour alimenter des barres métalliques, en particulier des barres pour le renforcement du béton, à partir d'une première station jusqu'à une seconde station d'un système pour traiter lesdites barres, ledit procédé comprenant les étapes consistant à :
prévoir un canal (2) conçu pour recevoir lesdites barres de ladite première station ;
amener lesdites barres ou les parties d'extrémité desdites barres le long dudit canal (2) à partir d'une première position correspondant à ladite première station jusqu'à une seconde position correspondant à ladite seconde station, les deux positions étant à l'intérieur dudit canal (2) ;
amener les barres ou les parties d'extrémité desdites barres, qui sont positionnées dans ladite seconde position, les unes sur les autres dans leur direction transversale ; et
prélever les barres ou les parties d'extrémité desdites barres qui ont été amenées les unes sur les autres, une par une ou en groupes, et les transférer dans ladite seconde station.

11. Procédé selon la revendication 10, dans lequel l'étape consistant à amener les barres les unes sur les autres comprend l'étape consistant à prévoir, dans ledit canal, des moyens (18) qui peuvent être commutés entre une configuration inactive dans laquelle lesdits moyens n'interfèrent pas avec le transport desdites barres ou des parties d'extrémité desdites barres dans ledit canal (2), et une configuration active dans laquelle les moyens définissent une section de support (S) pour lesdites barres qui a un profil en forme de V ou dans tous les cas sensiblement concave, dans lequel lesdites barres ou parties d'extrémité desdites barres se regroupent.

12. Procédé selon la revendication 10, dans lequel l'étape consistant à amener les barres les unes sur les autres comprend l'étape consistant à prévoir au moins une plaque (18) ayant un côté supérieur qui définit une section de support (S) pour lesdites barres, qui a un profil en forme de V ou dans tous les cas sensiblement concave, ladite plaque étant mobile entre une position abaissée dans laquelle elle n'interfère pas avec le transport desdites barres ou des parties d'extrémité desdites barres dans ledit canal, et une position levée dans laquelle lesdites barres ou parties d'extrémité desdites barres se regroupent dans ladite section (S).

13. Procédé selon la revendication 10, dans lequel l'étape consistant à amener les barres les unes sur les autres comprend l'étape consistant à prévoir deux leviers articulés mobiles d'une manière coordonnée l'un par rapport à l'autre, entre une condition inactive dans laquelle lesdits leviers n'interfèrent pas avec le transport desdites barres ou parties d'extrémité desdites barres dans ledit canal, et une condition active dans laquelle lesdits leviers définissent ensemble une section de support (S) pour lesdites barres qui a un profil en forme de V ou dans tous les cas sensiblement concave, dans lequel lesdites barres ou parties d'extrémité desdites barres se regroupent.

14. Procédé selon l'une quelconque des revendications 10 à 13, dans lequel ladite première station est une station de stockage et ladite seconde station est une station de traitement.

15. Procédé selon l'une quelconque des revendications 10 à 13, dans lequel ladite première station est une station de coupe et ladite seconde station est une station de pliage.

16. Procédé selon l'une quelconque des revendications 10 à 15, dans lequel l'étape consistant à amener lesdites barres dans ladite seconde position envisage d'amener lesdites barres à s'appuyer sur une plaque de butée (12) dudit canal.
